# EUROPEAN PATENT SPECIFICATION

(11) **EP 2 311 703 B1**
(45) Date of publication and mention of the grant of the patent: **28.08.2013**
(21) Application number: 09173288.3
(22) Date of filing: 16.10.2009
(51) Int. Cl.: B60T 8/26, B62L 3/08

(54) **Braking system for motorcycle**
Bremssystem für ein Motorrad
Système de freinage pour motocyclette

(43) Date of publication of application: 20.04.2011
(73) Proprietor: Yamaha Hatsudoki Kabushiki Kaisha, Iwata-shi, Shizuoka 438-8501 (JP); Continental Automotive Corporation, Yokohama-city Kanagawa 221-0031 (JP); Continental Teves AG & Co. OHG, 60488 Frankfurt (DE)
(72) Inventor: Kajiwara, Kunio, Iwata-shi Shizuoka 438-8501 (JP); Kusano, Taishi, Asahi-city Chiba 289-2505 (JP); Uchida, Takanori, Yokohama-city Kanagawa 221-0031 (JP); Kremer, Michael, 64846, Groß-Zimmern (DE); Meixner, Michael, 60320, Frankfurt am Main (DE); Seto, Hiroaki, Iwata-shi Shizuoka 438-8501 (JP)
(74) Representative: Grünecker, Kinkeldey, Stockmair & Schwanhäusser

(56) References cited:
- EP-A2- 1 277 635
- EP-A2- 2 075 168
- WO-A1-2008/090783
- JP-B- 3 457 154
- US-B1- 6 273 523
- US-B1- 6 409 285

## Description

### BACKGROUND OF THE INVENTION

### 1. Field of the Invention

The present invention relates to a braking system for a motorcycle. More specifically, the present invention relates to a braking system for a motorcycle including at least two braking mechanisms and an association mechanism which drives one of the braking mechanisms when the other braking mechanism is operated.

### 2. Description of the Related Art

As a braking system for a motorcycle, there has been conventionally proposed a braking system including two braking mechanisms and an association mechanism which drives one of the braking mechanisms when the other braking mechanism is operated. The following JP 11 034833 A **(**JP 3457154 B**)** discloses one example of the braking system having the two braking mechanisms and the association mechanism.

In a braking system having an association mechanism as disclosed in JP 11 034833 A **(**JP 3457154 B**)**, there is a problem as to how a braking force should be distributed to the front wheel and the rear wheel. Concerning the braking force distribution, it is described in JP 11 034833 A **(**JP 3457154 B**)** that a braking force is distributed such that in a region where vehicle body deceleration is equal to or higher than predetermined deceleration, a braking force distribution curve which is analogous to an ideal braking

force distribution curve is obtained.

Here, the ideal braking force distribution curve is a curve showing a relation between a front wheel braking force and a rear wheel braking force in which the front wheel and the rear wheel are brought into a locked state simultaneously. Therefore, by controlling such that the braking force distribution curve extends along the ideal braking force distribution curve, the front wheel and the rear wheel are less prone to be brought into the locked state.

However, when a braking force is distributed such that a braking force distribution curve which is analogous to the ideal braking force distribution curve is obtained, the association mechanism is driven at the same time when the rear wheel operation member is operated, and a braking force is generated not only for the rear wheel but also for the front wheel. Therefore, there is a problem that pitching is prone to occur in the motorcycle.

**Prior art document** US 6,409,285 B1 **discloses a brake system for a motorcycle which is provided with a front wheel and rear wheel interlocking brake system having a simple structure, and which is capable of automatically performing brake control of the front and rear wheels on the basis of the running state of the motorcycle. A front wheel and rear wheel interlocking brake system is provided for a motorcycle in which a front wheel brake and a rear wheel brake, each being hydraulically operated, are provided on a front wheel and a rear wheel, respectively. The brake system includes a front wheel side actuator for applying a hydraulic pressure to the front wheel brake. A rear wheel side actuator is provided for applying a hydraulic pressure to the rear wheel brake. At least one operating member is operated by a driver. An operated amount detecting member is provided for detecting the operated amounts of each brake operating member. A control member is provided for receiving and calculating each of operated amounts detected by each operated amount detecting member. An outputting drive control signals to the front wheel side actuator and the rear wheel side actuator on the basis of the calculated result. In this brake system, the control member performs brake control for single brake control for singly driving either the front wheel brake or the rear wheel brake and interlocking brake control for driving the front and rear wheel brakes in accordance with a specific braking force distribution characteristic, and causes control to switch between single brake control and interlocking brake control on the basis of the operated amounts detected by the first and second pressure sensors.**

**Prior art document** US 6,273,523 B1 **discloses a brake assembly for a motorcycle provided with a hydraulically actuated front brake and rear brake for a front wheel and a rear wheel, respectively, including, first brake actuating means and second brake actuating means applying hydraulic pressure, and an electronic control means, having a first hydraulic system extending from the first brake actuating means connected to the front brake, and a second hydraulic system extending from the second brake actuating means connected to the rear brake, the electronic control means receiving detection values from each of a first actuation amount detection means for detecting an actuation amount of the first brake actuating means, and second actuation amount detection means for detecting an actuation amount of the second brake actuating means and subjecting the values to computation, outputting control signals to a first hydraulically controlled actuator and a second hydraulically controlled actuator based on the result of computation, and actuating the front brake using the first hydraulically controlled actuator and actuating the rear brake using the second hydraulically controlled actuator.**

It is an object of the present invention to provide a braking system for a motorcycle having an association mechanism in which pitching is less prone to occur in the motorcycle.

**According to the present invention said object is solved by a braking system for a motorcycle having the features of independent claim 1. Preferred embodiments are laid down in the dependent claims.**

**Accordingly, there is provided a** braking system for a motorcycle having a front wheel and a rear wheel. The braking system for a motorcycle includes a first braking force generating mechanism, a first hydraulic pressure supply mechanism, a first operation member, a second braking force generating mechanism, a second hydraulic pressure supply mechanism, a second operation member, an association mechanism, a control unit, and an operation amount detection section. The first braking force generating mechanism is provided with the rear wheel. The first braking force generating mechanism generates a braking force when hydraulic pressure is supplied. The first hydraulic pressure supply mechanism supplies hydraulic pressure to the first braking force generating mechanism. The first operation member is for operating the first hydraulic pressure supply mechanism. The second braking force generating mechanism is provided with the front wheel. The second braking force generating mechanism generates a braking force when hydraulic pressure is supplied. The second hydraulic pressure supply mechanism supplies hydraulic pressure to the second braking force generating mechanism. The second operation member is for operating the second hydraulic pressure supply mechanism. The association mechanism supplies hydraulic pressure to the second braking force generating mechanism when the first operation member is operated. The control unit controls the association mechanism. The operation amount detection section detects an operation amount of the first operation member. The control unit causes the association mechanism not to supply hydraulic pressure to the second braking force generating mechanism when the operation amount of the first operation member is smaller than a predetermined third operation amount. When the operation amount of the first operation member is equal to or higher than the predetermined third operation amount, the control unit causes the association mechanism to supply hydraulic pressure to the second braking force generating mechanism.

The control unit controls the association mechanism such that a braking force distribution ratio of a magnitude of a braking force generated for the rear wheel to a magnitude of a braking force generated for the front wheel (15) becomes equal to a first ratio
when the operation amount of the first operation member is equal to or higher than the predetermined third operation amount (P1), and
as long as an operation amount of the first operation member is smaller than a predetermined first operation amount when a locked state of the rear wheel is determined, or
as long as an operation amount of the first operation member is smaller than a predetermined second operation amount higher than then the predetermined first operation amount when a locked state of the rear wheel is not determined.

The controls the association mechanism further such that the braking force distribution ratio becomes equal to a second ratio which is smaller than the first ratio after the operation amount of the first operation member is equal to or higher than the predetermined first operation amount when a locked state of the rear wheel is determined or higher than the predetermined second operation amount when the locked state of the rear wheel is not determined.

The braking system for a motorcycle may further include a vehicle speed detection section which detects a vehicle speed of the motorcycle. It is preferable that the control unit includes a storing section which stores an operation amount map that defines a relation between a vehicle speed of the motorcycle and the operation amount, and a calculating section which calculates the predetermined operation amount based on the operation amount map and the vehicle speed of the motorcycle to drive the association mechanism based on the calculated predetermined operation amount.

A rider's sensitivity of pitching is varied depending upon a vehicle speed. According to this structure, the operation amount of the first operation member in which generation of a braking force is started in the second braking force generating mechanism can be varied depending upon the vehicle speed. Thus, it is possible to prevent a rider from feeling the pitching in the entire vehicle speed region.

More specifically, the lower a vehicle speed of a motorcycle is, the more a rider feels the pitching of the motorcycle. Thus, in the operation amount map, it is preferable that the operation amount is greater as the vehicle speed is lower. According to this structure, when the vehicle speed of the motorcycle is lower, the operation amount of the first operation member in which generation of the braking force is started in the second braking force generating mechanism is increased more. Thus, it is possible to effectively prevent a rider from feeling the pitching of the motorcycle.

It is preferable that the control unit controls the association mechanism such that when the operation amount of the first operation member exceeds the predetermined operation amount, hydraulic pressure supplied to the second braking force generating mechanism has a magnitude corresponding to the first operation amount.

It is also preferable that the control unit controls the association mechanism such that when the operation amount of the first operation member exceeds the predetermined operation amount, hydraulic pressure supplied to the second braking force generating mechanism is gradually varied until hydraulic pressure has a magnitude corresponding to the first operation amount. With this structure, it is possible to prevent a braking force generated in the entire braking system from abruptly changing when the operation amount of the first operation member exceeds a predetermined operation amount.

The braking system for a motorcycle may further include a first brake fluid passage which connects the first hydraulic pressure supply mechanism and the first braking force generating mechanism with each other.

The association mechanism may include an association mechanism brake fluid passage which connects the first brake fluid passage and the second braking force generating mechanism with each other, and an association mechanism on-off valve which is disposed in the association mechanism brake fluid passage to open and close the association mechanism brake fluid passage. In this case, the control unit controls hydraulic pressure supplied to the second braking force generating mechanism by adjusting an opening of the association mechanism on-off valve.

The braking system for a motorcycle may further include a hydraulic pressure detection section which detects hydraulic pressure in the first brake fluid passage. The operation amount detection section may include the hydraulic pressure detection section. In this case, hydraulic pressure detected by the hydraulic pressure detection section can be detected as the operation amount.

The vehicle speed detection section may include a front wheel rotation speed sensor which detects a rotation speed of the front wheel, and a rear wheel rotation speed sensor which detects a rotation speed of the rear wheel.

According to the present **teaching,** the control unit causes the association mechanism not to supply hydraulic pressure to the second braking force generating mechanism when an operation amount of the first operation member is smaller than a predetermined operation amount, and the control unit causes the association mechanism to supply hydraulic pressure to the second braking force generating mechanism when the operation amount of the first operation member is equal to or higher than the predetermined operation amount. Therefore, when the operation amount of the first operation member is small, a braking force is not generated in the second braking force generating mechanism. Thus, when the operation amount of the first operation member is small, a braking force is generated only for the rear wheel. Therefore, it is possible to suppress pitching of a motorcycle.

### BRIEF DESCRIPTION OF THE DRAWINGS

Fig. 1 is a left side view of a motorcycle;
Fig. 2 is a schematic plan view of the motorcycle;
Fig. 3 is a schematic structure diagram showing a structure of a braking system;
Fig. 4 is a schematic structure diagram of the braking system when a brake lever is operated;
Fig. 5 is a schematic structure diagram of the braking system when a brake pedal is operated;
Fig. 6 is a schematic structure diagram of the braking system for explaining ABS action of a second braking force generating mechanism when the brake lever is being operated;
Fig. 7 is a schematic structure diagram of the braking system for explaining ABS action of a first and the second braking force generating mechanisms when the brake pedal is being operated;
Fig. 8 is a flowchart showing control during rear associationed operation;
Fig. 9 is a flowchart showing control during rear associationed operation;
Fig. 10 is an operation amount map which defines a relation between vehicle speed of a motorcycle and a predetermined hydraulic pressure (P₁) having correlation to the **third** operation amount;
Fig. 11 is a graph showing a relation between an upstream hydraulic pressure (P_{X1}) and a downstream hydraulic pressure (P_{X2}) ;
Fig. 12 is a graph showing a relation between a braking force (**FR** braking force) generated for a front wheel and a braking force (**RR** braking force) generated for a rear wheel, wherein a straight line **Z** shown with a broken line shows **FR** braking force and **RR** braking force when a braking force distribution ratio is a first ratio; asymbol C₁ shows an ideal braking force distribution curve; and a point **X** shows a point at which a locked state of the rear wheel 17 is detected; and

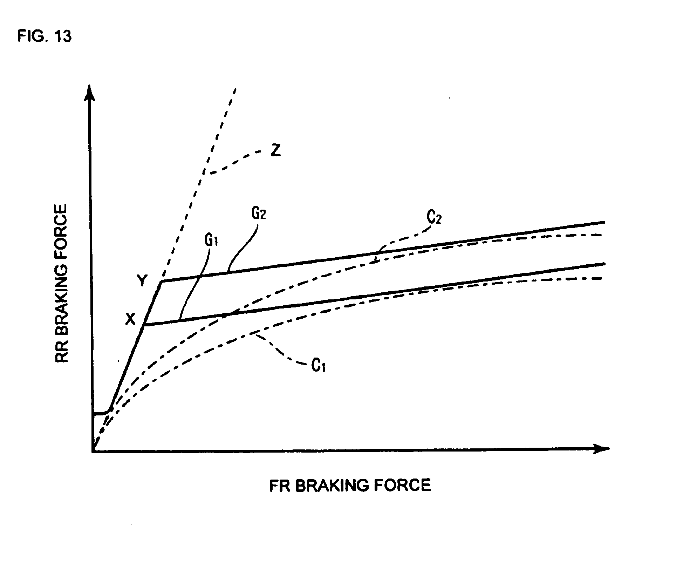

Fig. 13 is a graph showing a relation between a braking force (**FR** braking force) generated for the front wheel and a braking force (**RR** braking force) generated for the rear wheel. A straight line **Z** shown with a broken line shows **FR** braking force and **RR** braking force when a braking force distribution ratio is a first ratio, wherein a symbol C₁ shows an ideal braking force distribution curve when carrying weight is small; a symbol C₂ shows an ideal braking force distribution curve when the carrying weight is heavy; a point **X** shows a point at which a locked state of the rear wheel 17 is detected when the carrying weight is small; a point **Y** shows a point at which a locked state of the rear wheel 17 is detected when the carrying weight is heavy; a graph G₁ shows variation in a braking force distribution ratio when the carrying weight is small; and a graph G₂ shows variation in a braking force distribution ratio when the carrying weight is heavy.

### DESCRIPTION OF THE PREFERRED EMBODIMENT

One example of a preferred mode in which the present invention is implemented will be described. However, the invention is not limited to the embodiment below.

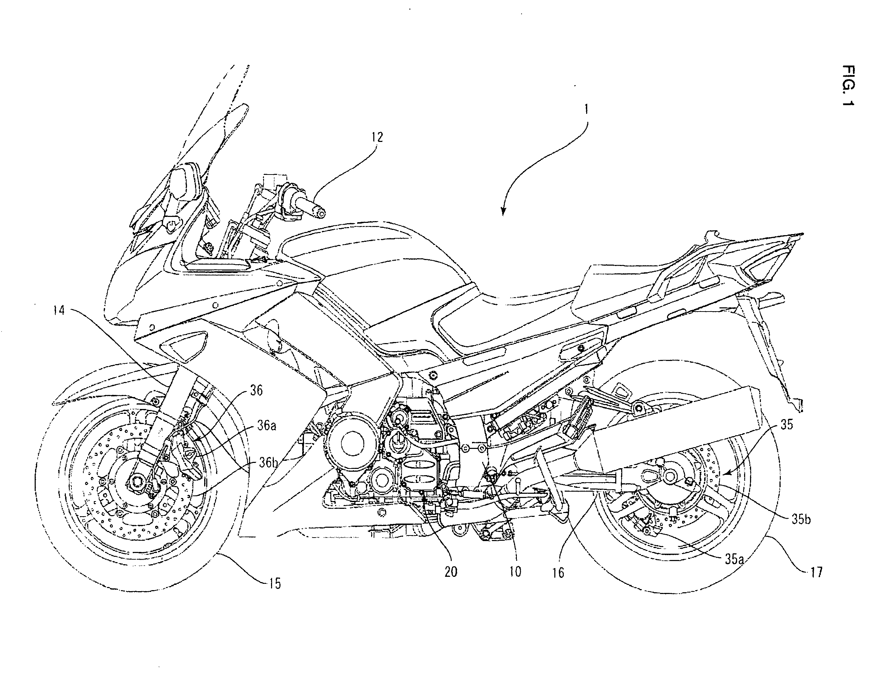

In this embodiment, one example of a preferred mode in which the present invention is implemented will be described based on a motorcycle 1 in a narrow sense shown in Fig. 1.

In the present invention, the motorcycle refers to any motorcycles in a broad sense. The motorcycle in the broad sense includes a moped, a motocrosser and a scooter in a narrow sense in addition to the motorcycle. The motorcycle in the broad sense includes a vehicle having two or more front wheels and/or two or more rear wheels.

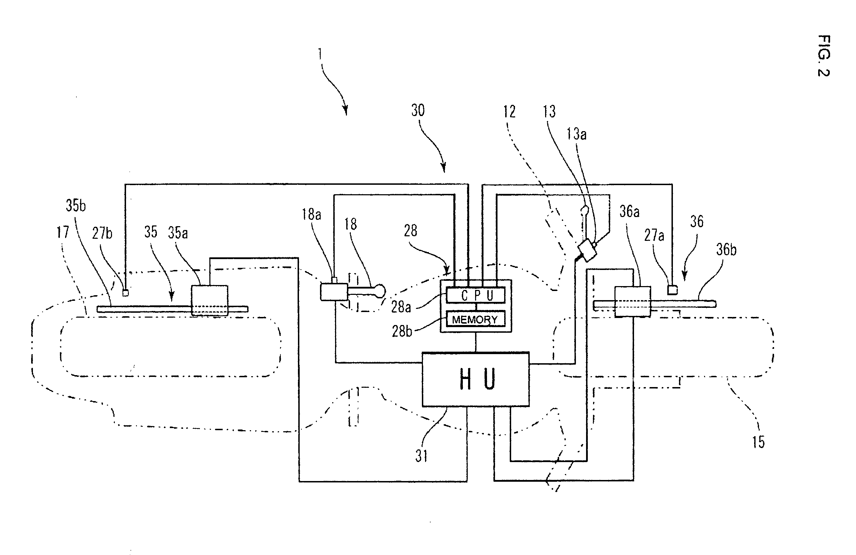

First, a schematic structure of the motorcycle 1 will be described with reference to Figs. 1 and 2. As shown in Fig. 1, the motorcycle 1 includes a body frame 10. A head pipe (not shown) is formed on a front end portion of the body frame 10. A steering shaft (not shown) is rotatably inserted into the head pipe. A pair of left and right front forks 14 are mounted on the steering shaft. A front wheel 15 is rotatably supported at lower end portions of the pair of left and right front forks 14. A steering handle bar 12 is mounted on the head pipe.

A pivot shaft (not shown) is mounted on a rear end portion of the body frame 10. A rear arm 16 is swingably mounted on the pivot shaft. A rear wheel 17 is rotatably supported by a rear end portion of the rear arm 16. The rear wheel 17 is driven by an engine 20 which is suspended by the body frame 10.

As shown in Fig. 2, the motorcycle 1 is provided with a braking system 30. The braking system 30 is for decelerating the motorcycle 1. The braking system 30 of the embodiment includes a front wheel-side braking mechanism which applies a brake to the front wheel 15, a rear wheel-side braking mechanism which applies a brake to the rear wheel 17, a front association mechanism, a rear association mechanism, and an ABS mechanism. The front association mechanism refers to a mechanism which drives the rear wheel-side braking mechanism when the front wheel-side braking mechanism is operated. The rear association mechanism refers to a mechanism which drives the front wheel-side braking mechanism when the rear wheel-side braking mechanism is operated. Most mechanisms of the braking system 30 are accommodated in **a** HU (Hydraulic Unit) 31.

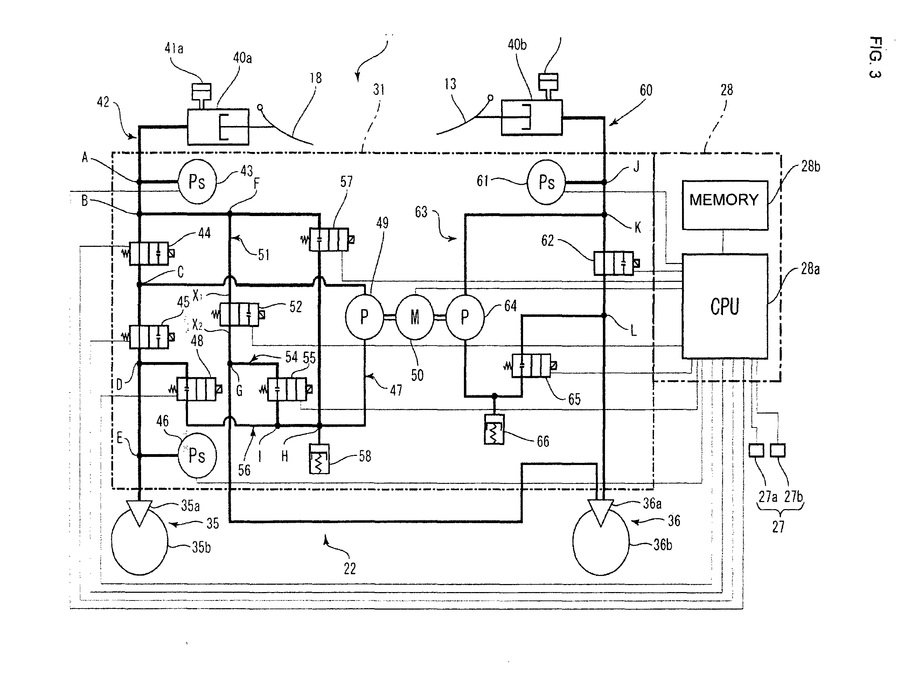

The structure of the braking system 30 will be described in detail with reference to Figs. 2 and 3. As shown in Fig. 3, the braking system 30 includes a first braking force generating mechanism 35 and a second braking force generating mechanism 36.

As shown in Fig. 2, the first braking force generating mechanism 35 is provided to the rear wheel 17. The first braking force generating mechanism 35 is supplied with hydraulic pressure, thereby generating a braking force for the rear wheel 17. More specifically, the first braking force generating mechanism 35 includes a first caliper 35a and a first brake disk 35b. The first brake disk 35b rotates together with the rear wheel 17.

The second braking force generating mechanism 36 is provided to the front wheel 15. The second braking force generating mechanism 36 is supplied with hydraulic pressure, thereby generating a braking force for the front wheel 15. The second braking force generating mechanism 36 includes a second caliper 36a and a second brake disk 36b. More specifically, the second brake disk 36b rotates together with the front wheel 15.

As shown in Fig. 3, the first braking force generating

mechanism 35 is connected to a first master cylinder 40a through a first brake fluid passage 42. A reservoir tank 41a and a brake pedal 18 as a first operation member are connected to the first master cylinder 40a. If a rider operates the brake pedal 18, hydraulic pressure is supplied from the first master cylinder 40a to the first braking force generating mechanism 35.

A second hydraulic pressure sensor 43 as an operation amount detection section and a hydraulic pressure detection section is connected to a point A of the first brake fluid passage 42. The second hydraulic pressure sensor 43 detects hydraulic pressure at the point A of the first brake fluid passage 42. With this, an operation amount of the brake pedal 18 as the first operation member is detected. A sensor which detects the operation amount of the brake pedal 18 may be provided separately from the second hydraulic pressure sensor 43. For example, the brake pedal 18 may be provided with a position sensor or a stroke sensor.

A first on-off valve 44 and a third on-off valve 45 are disposed in the first brake fluid passage 42. The first on-off valve 44 is disposed between a point B and a point C of the first brake fluid passage 42. The first on-off valve 44 is an open-when-nonenergized type on-off valve which opens when electric power is not supplied thereto, and which closes when electric power is supplied thereto. The third on-off valve 45 as the second association mechanism on-off valve is disposed between the point C and a point D of the first brake fluid passage 42. The third on-off valve 45 is also an open-when-nonenergizedtype on-off valve like the first on-off valve 44.

A third hydraulic pressure sensor 46 is connected to a point E of the first brake fluid passage 42. The third hydraulic pressure sensor 46 can detect hydraulic pressure more precisely than the second hydraulic pressure sensor 43. However, the second hydraulic pressure sensor 43 is more excellent in terms of the resistance to pressure than the third hydraulic pressure sensor 46.

Here, the point B of the first brake fluid passage 42 closer to the first master cylinder 40a and the point C closer to the side of the first braking force generating mechanism 35 than a portion of the first brake fluid passage 42 where the first on-off valve 44 is disposed are connected to each other through a third brake fluid passage 47. The third brake fluid passage 47 extends from the point B to the point C through a point F and a point H.

**A (first)** brake fluid pump 49 is disposed in the third brake fluid passage 47. The brake fluid pump 49 is connected to a motor 50. The brake fluid pump 49 is activated when the motor 50 is driven by a later-described ECU 28. If the brake fluid pump 49 is activated, pressure on the side of the point B becomes low pressure and the pressure on the side of the point C becomes high pressure.

A second on-off valve 57 is disposed in the third brake fluid passage 47. More specifically, the second on-off valve 57 is disposed closer to the point B than the brake fluid pump 49 of the third brake fluid passage 47. The second on-off valve 57 is a closed-when-nonenergized type on-off valve which closes when electric power is not supplied thereto and which opens when electric power is supplied thereto.

Further, a buffer chamber 58 is connected to the point H of the third brake fluid passage 47.

The point F located closer to the point B than the second on-off valve 57 is connected to a second caliper 36a through a fourth brake fluid passage 51 as the association mechanism brake fluid passage. A fifth on-off valve 52 as the association mechanism on-off valve is disposed between the point F and a point G of the fourth brake fluid passage 51. The fifth on-off valve 52 is an open-when-nonenergized type on-off valve. In this embodiment, the fifth on-off valve 52 and the fourth brake fluid passage 51 constitute the association mechanism 22.

The point D of the first brake fluid passage 42 and the point H of the third brake fluid passage 47 are connected to each other through a fifth brake fluid passage 56. A fourth on-off valve 48 is disposed in the fifth brake fluid passage 56. The fourth on-off valve 48 is a closed-when-nonenergized type on-off valve.

The point G of the fourth brake fluid passage 51 and a point I of the fifth brake fluid passage 56 are connected to each other through a sixth brake fluid passage 54. A sixth on-off valve 55 is disposed in the sixth brake fluid passage 54. The sixth on-off valve 55 is a closed-when-nonenergized type on-off valve.

The second braking force generating mechanism 36 is connected to a second master cylinder 40b through a second brake fluid passage 60. A reservoir tank 41b and a brake lever 13 as a second operation member are connected to the second master cylinder 40b. If a rider operates the brake lever 13, hydraulic pressure is supplied from the second master cylinder 40b to the second braking force generating mechanism 36.

A first hydraulic pressure sensor 61 is connected to a point J of the second brake fluid passage 60. The first hydraulic pressure sensor 61 detects hydraulic pressure at the point J of the second brake fluid passage 60. With this, the operation amount of the brake lever 13 as the second operation member is indirectly detected.

A sensor which directly detects the operation amount of the brake lever 13 may be disposed instead of the first hydraulic pressure sensor 61, or together with the first hydraulic pressure sensor 61. An example of the sensor which directly detects the operation amount of the brake lever 13 includes a position sensor which detects a position of the brake lever 13.

A seventh on-off valve 62 is disposed in a portion closer to the second braking force generating mechanism 36 than the point J of the second brake fluid passage 60. The seventh on-off valve 62 is an open-when-nonenergized type on-off valve.

A point K of the second brake fluid passage 60 closer to the second master cylinder 40b and a point L of the second brake fluid passage 60 closer to the side of the second braking force generating mechanism 36 than the seventh on-off valve 62 are connected to each other through a seventh brake fluid passage 63.

A second brake fluid pump 64 is disposed in the seventh brake fluid passage 63. The second brake fluid pump 64 is driven by the motor 50 mentioned above. If the second brake fluid pump 64 is driven, the pressure on the side of the point L becomes low pressure and the pressure on the side of the point K becomes high pressure.

In this embodiment, in a state where a power source of the motorcycle 1 is ON, the motor 50 is always driven, and the first and the second brake fluid pumps 49 and 64 are always activated.

An eighth on-off valve 65 is disposed between the second brake fluid pump 64 and the point L. The eighth on-off valve 65 is a closed-when-nonenergized type on-off valve. A buffer chamber 66 is connected to a connection point between the eighth on-off valve 65 and the second brake fluid pump 64.

As shown in Fig. 3, the ECU (Electronic Control Unit) 28 as a control unit is disposed adjacent to the HU 31. In this embodiment, the ECU 28 is used only for controlling the HU 31. An ECU (not shown) used for controlling the engine 20 shown in Fig. 1 is provided independently from the ECU 28. However, the present invention is not limited to this configuration. For example, one ECU 28 may control both the engine 20 and the HU 31.

The ECU 28 includes a CPU 28a as a calculating section and a memory 28b as a storing section connected to the CPU 28a. Various settings are stored in the memory 28b as will be described in detail later. Various detection values are also stored in the memory 28b.

The CPU 28a is connected to the on-off valves, the hydraulic pressure sensors and the motor 50 which are included in the HU 31. The on-off valves and the motor 50 included in the HU 31 are controlled by the CPU 28a. Hydraulic pressures detected by the hydraulic pressure sensors 43, 46 and 61 are sent to the CPU 28a.

A front wheel rotation speed sensor 27a and a rear wheel rotation speed sensor 27b are connected to the CPU 28a. A rotation speed of the front wheel 15 is detected by the front wheel rotation speed sensor 27a and is output to the CPU 28a. A rotation speed of the rear wheel 17 is detected by the rear wheel rotation speed sensor 27b and is output to the CPU 28a.

In this embodiment, the CPU 28a calculates a vehicle speed which is a speed of the motorcycle 1 based on output from the front wheel rotation speed sensor 27a and the rear wheel rotation speed sensor 27b. That is, in this embodiment, the front wheel rotation speed sensor 27a and the rear wheel rotation speed sensor 27b constitute a vehicle speed sensor 27 as the vehicle speed detection section. In this embodiment, the vehicle speed sensor 27 constitutes the locked state detection section.

A method for calculating a vehicle speed from the front wheel rotation speed and the rear wheel rotation speed is not especially limited. For example, an average value of the front wheel rotation speed and the rear wheel rotation speed may be defined as the vehicle speed.

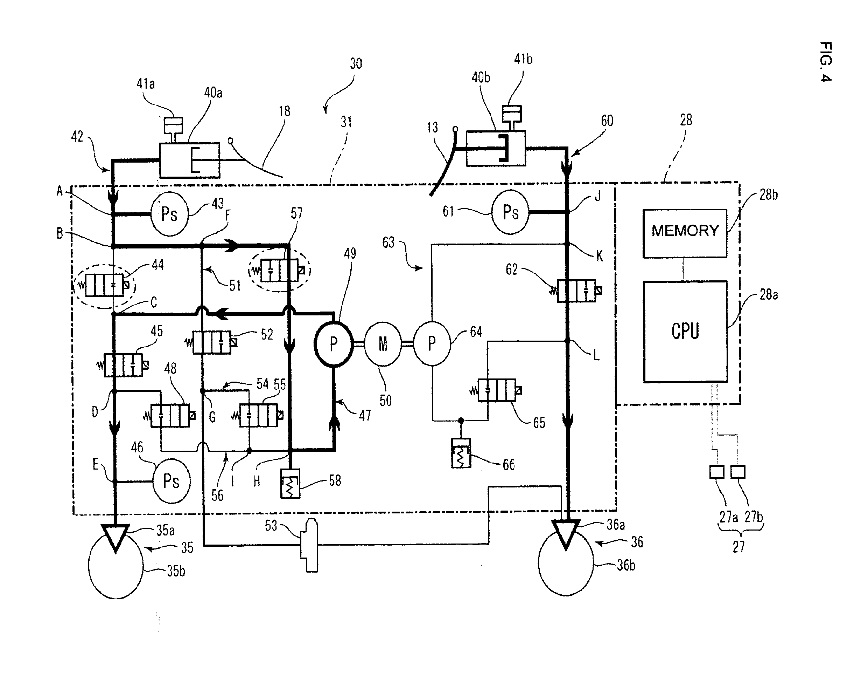

Next, basic control action of the braking system 30 will be described with reference to Figs. 4 to 7. In Figs. 4 to 7, on-off valves which are surrounded by phantom lines are energized on-off valves. On the other hand, on-off valves which are not surrounded by the phantom lines are nonenergized on-off valves.

Fig. 4 is a schematic structure diagram of the braking system when the brake lever 13 is operated. As shown in Fig. 4, if a rider operates the brake lever 13, hydraulic pressure is supplied from the second master cylinder 40b. Here, the seventh on-off valve 62 is the open-when-nonenergized type on-off valve. Therefore, hydraulic pressure from the second master cylinder 40b is supplied to the second caliper 36a through the second brake fluid passage 60. With this, a braking force is generated in the second braking force generating mechanism 36 which is provided to the front wheel 15.

If the brake lever 13 is operated, the increase of hydraulic pressure in the second brake fluid passage 60 is detected by the first hydraulic pressure sensor 61, and this fact is output to the ECU 28. The ECU 28 determines whether or not the brake lever 13 is operated based on hydraulic pressure in the second brake fluid passage 60.

If the ECU 28 determines that the brake lever 13 is operated, the ECU 28 closes the first on-off valve 44 and opens the second on-off valve 57. As a result, brake fluid in the first master cylinder 40a is sucked by the first brake fluid pump 49, and the brake fluid is supplied to the first caliper 35a through the third brake fluid passage 47 and the first brake fluid passage 42. With this, a braking force is generated in the first braking force generating mechanism 35 which is provided to the rear wheel 17.

In the braking system 30, if the brake lever 13 is operated, a braking force is generated in the second braking force generating mechanism 36 and a braking force is generated also in the first braking force generating mechanism 35.

This associationed operation is realized through the ECU 28. For this reason, this front associationed operation is called an electrically associationed operation.

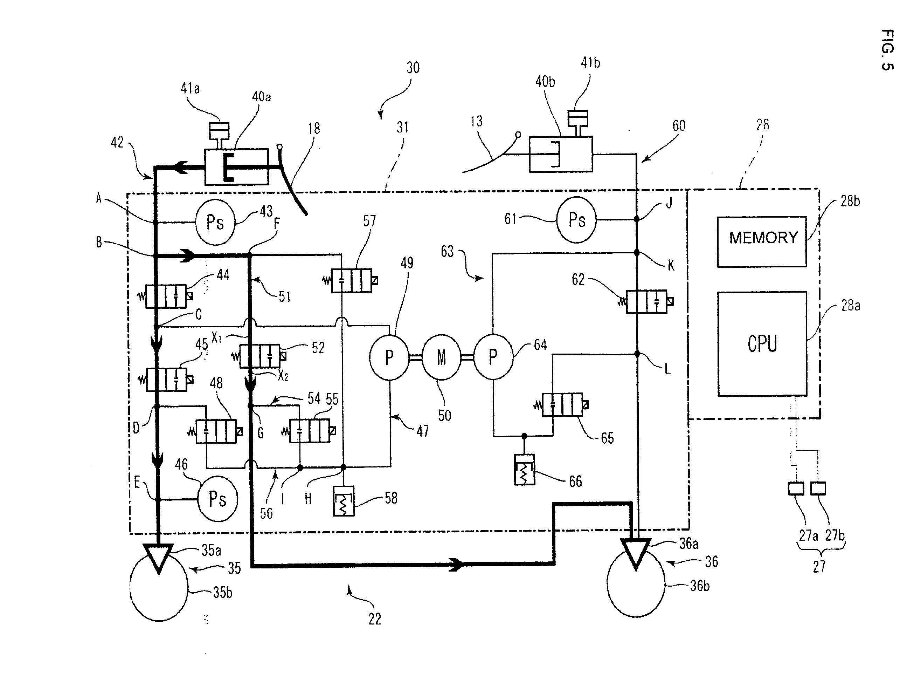

Fig. 5 is a schematic structure diagram of the braking system when the brake pedal 18 is operated. As shown in Fig. 5, if the brake pedal 18 is operated, brake fluid is discharged from the first master cylinder 40a. Here, the first on-off valve 44 and the third on-off valve 45 are open-when-nonenergized type on-off valves. Therefore, the brake fluid discharged from the first master cylinder 40a is supplied to the first caliper 35a through the first brake fluid passage 42. With this, a braking force is generated in the first braking force generating mechanism 35 which is provided to the rear wheel 17.

The fifth on-off valve 52 is also the open-when-nonenergized type on-off valve. Therefore, brake fluid discharged from the first master cylinder 40a is supplied also to the second caliper 36a through the fourth brake fluid passage 51. With this, a braking force is generated in the second braking force generating mechanism 36 which is provided to the front wheel 15.

Thus in the braking system 30, if the brake pedal 18 is operated, a braking force is generated not only in the first braking force generating mechanism 35 but also in the second braking force generating mechanism 36.

This associationed operation is different from the associationed operation caused when the brake lever 13 is operated and is mechanically performed without using the ECU 28. Thus, this rear associationed operation is called a mechanically associationed operation.

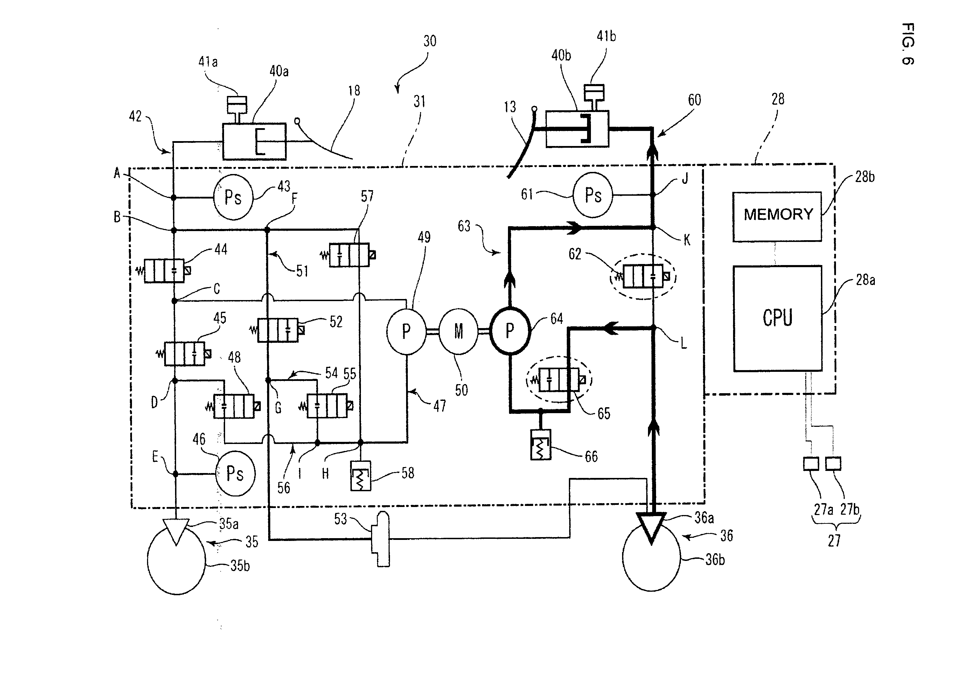

Fig. 6 is a schematic structure diagram of the braking system for describing the ABS action of the second braking force generating mechanism 36 when the brake lever 13 is operated.

The ECU 28 detects a locked state of the front wheel 15 based on output from the front wheel rotation speed sensor 27a and output from the rear wheel rotation speed sensor 27b. More specifically, the ECU 28 detects the locked state of the front wheel 15 when the magnitude of the front wheel rotation speed is largely reduced with respect to the vehicle speed.

If the ECU 28 detects the locked state of the front wheel 15, the ECU 28 supplies current to the seventh and the eighth on-off valves 62 and 65. With this, the seventh on-off valve 62 is closed and the eighth on-off valve 65 is opened. Therefore, brake fluid is sent from the second caliper 36a to the second master cylinder 40b through the seventh brake fluid passage 63. As a result, a braking force generated in the second braking force generating mechanism 36 is reduced.

If the ECU 28 detects that the locked state of the front wheel 15 is released, the ECU 28 stops the current supply to the seventh and the eighth on-off valves 62 and 65. With this, the seventh on-off valve 62 is opened and the eighth on-off valve 65 is closed. As a result, a braking force generated in the second braking force generating mechanism 36 is again increased.

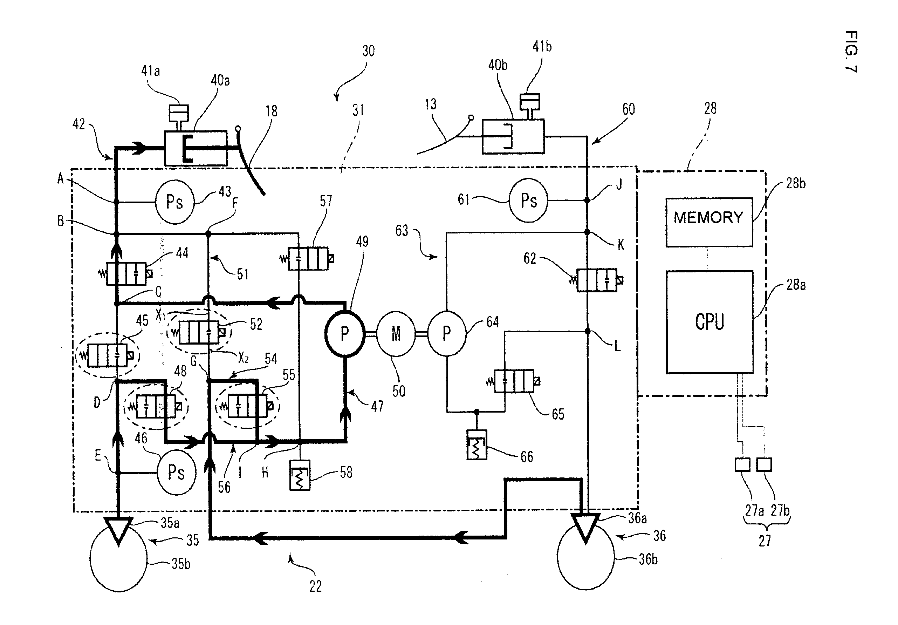

Fig. 7 is a schematic structure diagram of the braking system for describing the ABS action of the first and the second braking force generating mechanisms 35 and 36 when the brake pedal 18 is operated.

The ECU 28 detects the locked state of the rear wheel 17 based on output from the front wheel rotation speed sensor 27a and output from the rear wheel rotation speed sensor 27b. More specifically, the ECU 28 detects the locked state of the rear wheel 17 when the level of the rear wheel rotation speed is largely reduced with respect to the vehicle speed.

If the ECU 28 detects the locked state of the rear wheel 17, the ECU 28 supplies current to the third on-off valve 45 and the fourth on-off valve 48. With this, the third on-off valve 45 is closed and the fourth on-off valve 48 is opened. Therefore, the brake fluid in the first caliper 35a is sent to the first master cylinder 40a through the third brake fluid passage 47. As a result, a braking force generated in the first braking force generating mechanism 35 is reduced.

If the ECU 28 detects that the locked state of the rear wheel 17 is released, the ECU 28 stops the current supply to the third and the fourth on-off valves 45 and 48. With this, the third on-off valve 45 is opened and the fourth on-off valve 48 is closed. As a result, a braking force generated in the first braking force generating mechanism 35 is again increased.

These ABS actions are the same also during the front associationed operation in which the brake lever 13 is being operated.

If the ECU 28 detects the locked state of the front wheel 15, the ECU 28 supplies current to the fifth on-off valve 52 and the sixth on-off valve 55 as shown in Fig. 7. With this, the fifth on-off valve 52 is closed and the sixth on-off valve 55 is opened. Thus, brake fluid in the second caliper 36a is sent to the second master cylinder 40b through the sixth brake fluid passage 54. As a result, a braking force generated in the second braking force generating mechanism 36 is reduced.

If the ECU 28 detects that the locked state of the front wheel 15 is released, the ECU 28 stops the current supply to the fifth and the sixth on-off valves 52 and 55. With this, the fifth on-off valve 52 is opened and the sixth on-off valve 55 is closed. As a result, a braking force generated in the second braking force generating mechanism 36 is again increased.

Next, control during the rear associationed operation in the braking system 30 will be described in detail mainly with reference to Figs. 5, 8 and 9.

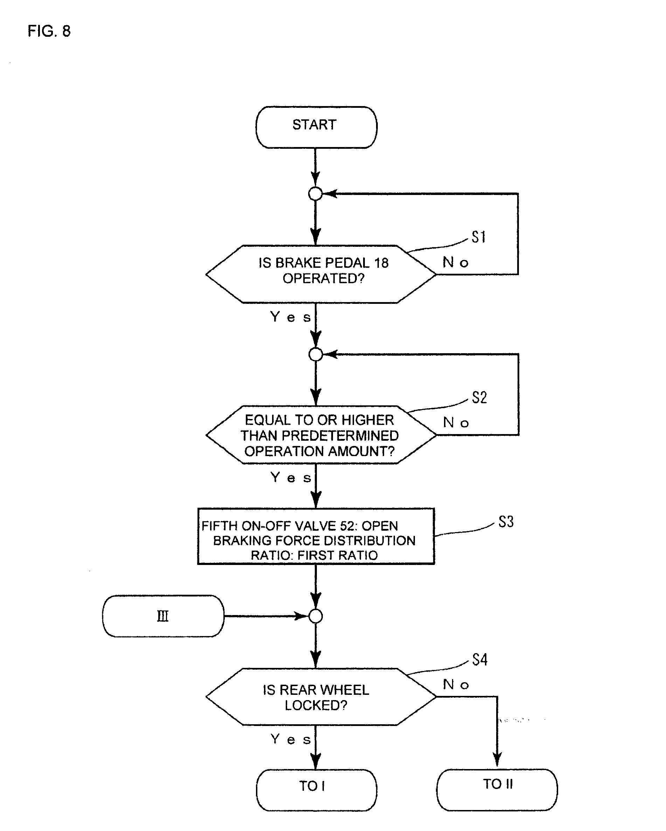

As shown in Fig. 8, in step S1, the ECU 28 shown in Fig. 5 determines whether or not the brake pedal 18 is operated based on output of the second hydraulic pressure sensor 43 as the operation amount detection section. More specifically, when hydraulic pressure detected by the second hydraulic pressure sensor 43 becomes equal to or higher than a predetermined hydraulic pressure, the ECU 28 determined that the brake pedal 18 is operated. When hydraulic pressure detected by the second hydraulic pressure sensor 43 is smaller than the predetermined hydraulic pressure, the ECU 28 determines that the brake pedal 18 is not operated. In such a case, step S1 is again executed.

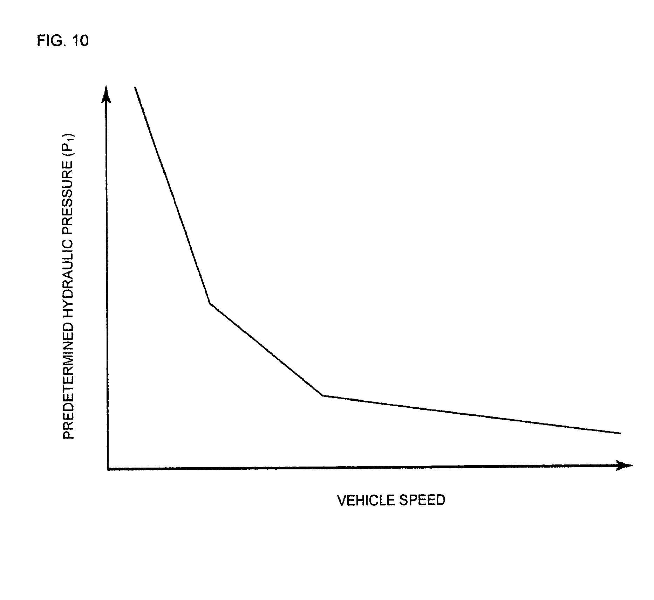

When ECU 28 determines that the brake pedal 18 is operated in step S1, the procedure is advanced to step S2. In step S2, the ECU 28 determines whether or not the brake pedal 18 is operated more than a predetermined operation amount based on hydraulic pressure detected by the second hydraulic pressure sensor 43. More specifically, in this embodiment, the operation amount of the brake pedal 18 is detected as hydraulic pressure detected by the second hydraulic pressure sensor 43. Therefore, in step S2, the ECU 28 determines whether or not hydraulic pressure detected by the second hydraulic pressure sensor 43 becomes equal to or higher than the predetermined hydraulic pressure (P₁). The memory 28b stores a hydraulic pressure map (operation amount map) which defines a relation between the vehicle speed of the motorcycle 1 and the hydraulic pressure (P₁) shown in Fig. 10. In the hydraulic pressure map of the embodiment, as the vehicle speed of the motorcycle 1 is lower, the hydraulic pressure (P₁) is greater. Thus, in this embodiment, as the vehicle speed of the motorcycle 1 is lower, the predetermined operation amount becomes greater.

The CPU 28a calculates the predetermined hydraulic pressure (P₁) corresponding to the **third** predetermined operation amount based on the hydraulic pressure map and the vehicle speed of the motorcycle 1. The CPU 28a determines whether or not hydraulic pressure detected by the second hydraulic pressure sensor 43 is equal to or higher than the calculated predetermined hydraulic pressure (P₁). When hydraulic pressure detected by the second hydraulic pressure sensor 43 is equal to or higher than the predetermined hydraulic pressure (P₁), the CPU 28a determines that the brake pedal 18 is operated more than the predetermined operation amount. On the other hand, when hydraulic pressure detected by the second hydraulic pressure sensor 43 is smaller than the calculated predetermined hydraulic pressure (P₁), the CPU 28a determines that the brake pedal 18 is not operated more than the predetermined operation amount. When it is determined that the brake pedal 18 is not operated more than the predetermined operation amount, step S2 is again executed.

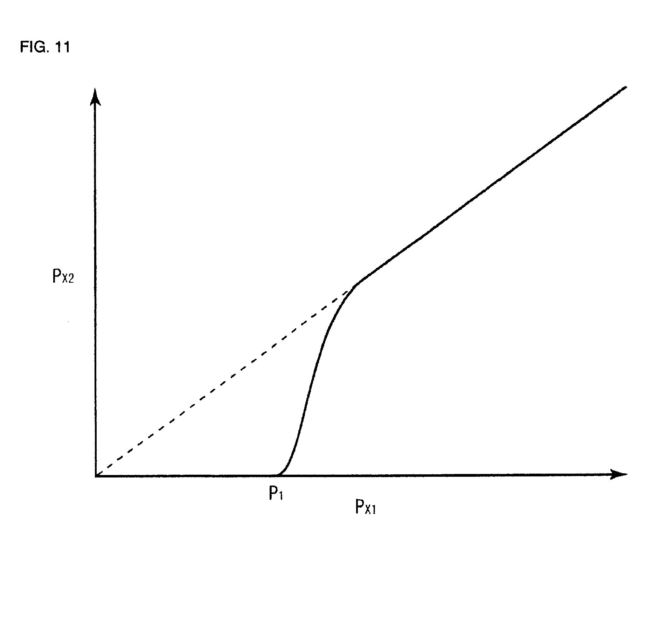

On the other hand, when it is determined that the brake pedal 18 is operated more than the predetermined operation amount, the procedure is advanced to step S3. In step S3, the fifth on-off valve 52 is opened by the ECU 28. With this, the rear associationed operation is started. The ECU 28 adjusts an opening of at least one of the third on-off valve 45 and the fifth on-off valve 52 such that the braking force distribution ratio becomes equal to the first ratio. In more detail, the ECU 28 gradually varies hydraulic pressure supplied to the second braking force generating mechanism 36 until the braking force distribution ratio becomes equal to the first ratio by gradually varying the opening of at least one of the third on-off valve 45 and the fifth on-off valve 52. Thus, a hydraulic pressure (P_{X1}) in an upstream portion X₁ located upstream of the fifth on-off valve 52 of the fourth brake fluid passage 51 shown in Fig. 5 and a hydraulic pressure (P_{X2}) in a downstream portion X₂ located downstream of the fifth on-off valve 52 are in a relation shown in Fig. 11. More specifically, the hydraulic pressure (P_{X2}) in the downstream portion X₂ does not rise until the hydraulic pressure (P_{X1},) in the upstream portion X₁ reaches the predetermined hydraulic pressure (P₁). If the hydraulic pressure (P_{X1}) in the upstream portion X₁ exceeds the hydraulic pressure (P₁), the hydraulic pressure (P_{X2}) in the downstream portion X₂ is gradually increased until the hydraulic pressure (P_{X1}) in the upstream portion X₁ and the hydraulic pressure (P_{X2}) in the downstream portion X₂ become equal to each other.

Here, the "first ratio" is a value which can appropriately be set in accordance with required characteristics of the motorcycle 1. It is preferable that the first ratio is such a value that the rear wheel 17 is brought into the locked state earlier than the front wheel 15 also when the carrying weight is the maximum weight. The "first ratio" is usually set in a range between 0.5 and 1.5, and can be set to 1, for example. The first ratio may be or may not be constant.

In this specification, the term "braking force distribution ratio" is a ratio of a braking force (**RR** braking force) generated in the first braking force generating mechanism 35 to a braking force (**FR** braking force) generated in the second braking force generating mechanism 36. For example, the expression that a braking force distribution ratio is 1 means that a braking force (**FR** braking force) generated in the second braking force generating mechanism 36 and a braking force (**RR** braking force) generated in the first braking force generating mechanism 35 are equal to each other. For example, the expression that a braking force distribution ratio is 0.5 means that a braking force (**RR** braking force) generated in the first braking force generating mechanism 35 is 0.5 times of a braking force (**FR** braking force) generated in the second braking force generating mechanism 36.

After step S3, step S4 is executed. In step S4, the ECU 28 determines whether or not the rear wheel 17 is in the locked state based on output from the vehicle speed sensor 27 as the locked state detection section. More specifically, the ECU 28 calculates vehicle speed of the motorcycle 1 from a rotation speed of the front wheel 15 detected by a front wheel rotation speed sensor 27a and a rotation speed of the rear wheel 17 detected by a rear wheel rotation speed sensor 27b. The ECU 28 compares the calculated vehicle speed and the rotation speed of the rear wheel 17 with each other, thereby determining whether or not the rear wheel 17 is in the locked state.

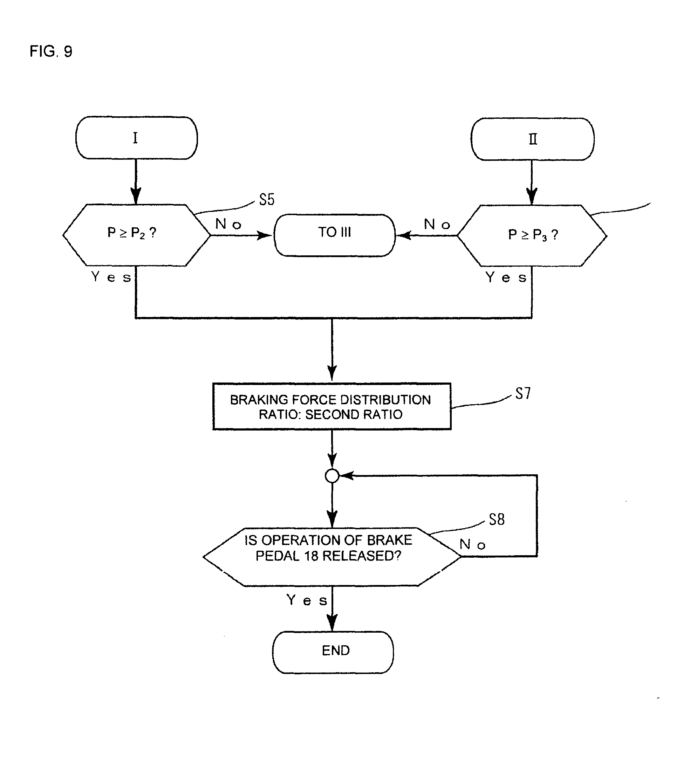

In step S4, when it is determined that the rear wheel 17 is in the locked state, the procedure is advanced to step S5 shown in Fig. 9. In step S5, the ECU 28 determines whether or not the operation amount of the brake pedal 18 is equal to or higher than the first operation amount. That is, the ECU 28 determines whether or not the hydraulic pressure (P) in the first brake fluid passage 42 which has correlation to the operation amount of the brake pedal 18 is equal to or higher than the predetermined hydraulic pressure (P₂). When it is determined that the hydraulic pressure (P) in the first brake fluid passage 42 is smaller than the predetermined hydraulic pressure (P₂) and the operation amount of the brake pedal 18 is smaller than the first operation amount, the procedure is returned to step S4 shown in Fig. 8. Thus, in this embodiment, if the operation amount of the brake pedal 18 is smaller than the first operation amount after the locked state of the rear wheel 17 is detected during operation of the brake pedal 18, the association mechanism 22 is controlled such that the braking force distribution ratio becomes equal to the first ratio.

On the other hand, when it is determined in step S5 that the hydraulic pressure (P) in the first brake fluid passage 42 is equal to or higher than the predetermined hydraulic pressure (P₂) and the operation amount of the brake pedal 18 is equal to or higher than the first operation amount, the procedure is advanced to step S7 shown in Fig. 9. In step S7, the ECU 28 widens the opening of the fifth on-off valve 52 such that the braking force distribution ratio becomes equal to the second ratio which is smaller than the first ratio. Therefore, in this embodiment, when the operation amount of the brake pedal 18 is equal to or higher than the second operation amount after the locked state of the rear wheel 17 is detected during operation of the brake pedal 18, the association mechanism 22 is controlled such that the braking force distribution ratio becomes equal to the second ratio.

In this embodiment, the second ratio can appropriately be set in accordance with required characteristics of the motorcycle 1 within a range smaller than the first ratio. The second ratio can be set in a range between 0.2 and 1, for example. The second ratio may be or may not be constant.

When it is determined in step S4 shown in Fig. 8 that the rear wheel 17 is not in the locked state, the procedure is advanced to step S6 shown in Fig. 9. In step S6, the ECU 28 determines whether or not the operation amount of the brake pedal 18 is equal to or higher than the second operation amount. More specifically, the ECU 28 determines whether or not the hydraulic pressure (P) in the first brake fluid passage 42 which has correlation to the operation amount of the brake pedal 18 is equal to or higher than a predetermined hydraulic pressure (P₃). When it is determined that the hydraulic pressure (P) in the first brake fluid passage 42 is smaller than the hydraulic pressure (P₃) and the operation amount of the brake pedal 18 is smaller than the second operation amount, the procedure is returned to step S4 shown in Fig. 8. Therefore, in this embodiment, when the operation amount of the brake pedal 18 is smaller than the second operation amount until the locked state of the rear wheel 17 is detected after the operation of the brake pedal 18 is started, the association mechanism 22 is controlled such that the braking force distribution ratio becomes equal to the first ratio.

On the other hand, when it is determined in step S6 that the hydraulic pressure (P) in the first brake fluid passage 42 is equal to or higher than the predetermined hydraulic pressure (P₃) and the operation amount of the brake pedal 18 is equal to or higher than the second operation amount, the procedure is advanced to step S7 shown in Fig. 9. In step S7, the ECU 28 increases the opening of the fifth on-off valve 52 such that the braking force distribution ratio becomes equal to the second ratio which is smaller than the first ratio. Thus, in this embodiment, when the operation amount of the brake pedal 18 is equal to or higher than the second operation amount until the locked state of the rear wheel 17 is detected after the operation of the brake pedal 18 is started, the association mechanism 22 is controlled such that the braking force distribution ratio becomes equal to the second ratio.

The predetermined hydraulic pressure (P₃) in step S6 can appropriately be set in accordance with the required characteristics of the motorcycle 1. The predetermined hydraulic pressure (P₃) in step S6 is usually set to hydraulic pressure which is greater than the predetermined hydraulic pressure (P₂) in step S5 in many cases.

After step S7, step S8 is executed. The ECU 28 determines in step S8 whether or not the operation of the brake pedal 18 is released based on hydraulic pressure detected by the second hydraulic pressure sensor 43. If hydraulic pressure detected by the second hydraulic pressure sensor 43 is equal to or higher than the predetermined hydraulic pressure, it is determined that the operation of the brake pedal 18 is not released. In this case, step S8 is again executed.

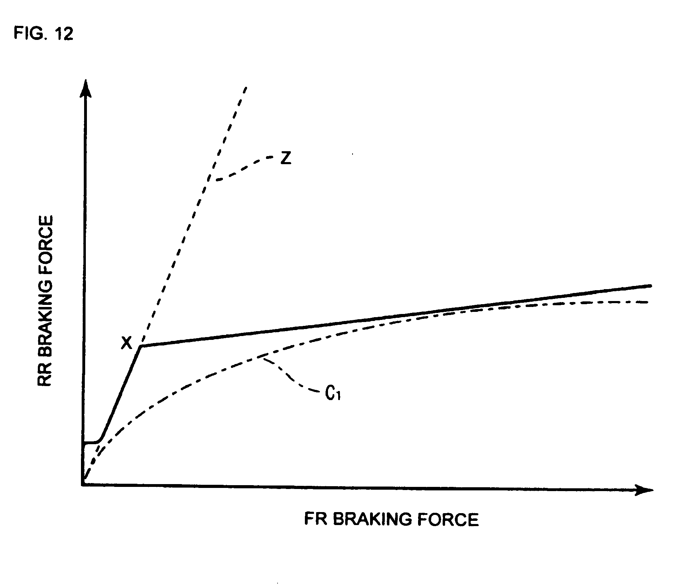

In this embodiment, the above-described control is carried out during the rear associationed operation. Thus, a braking force (**FR** braking force) generated for the front wheel 15 and a braking force (**RR** braking force) generated for the rear wheel 17 have a relation as shown in Fig. 12. In Fig. 12, a straight line **Z** shown with a broken line shows **FR** braking force and **RR** braking force when the braking force distribution ratio is the first ratio. A symbol C₁ represents an ideal braking force distribution curve. The point **X** shows a point at which a locked state of the rear wheel 17 is detected.

More specifically, in this embodiment, hydraulic pressure is not supplied to the second braking force generating mechanism 36 when the operation amount of the brake pedal 18 is smaller than the predetermined operation amount. When the operation amount of the brake pedal 18 is equal to or higher than the predetermined operation amount, hydraulic pressure is supplied to the second braking force generating mechanism 36. Therefore, Fr braking force is not generated at the initial stage of operation of the brake pedal 18, and only Rr braking force is generated. After the Rr braking force is increased, Fr braking force is increased. Thus, by the operation of the brake pedal 18, it is suppress pitching of the motorcycle 1.

A rider's sensitivity of pitching is varied depending upon a vehicle speed. In this embodiment, the hydraulic pressure (P₁) corresponding to the predetermined operation amount in step S2 shown in Fig. 8 is a value corresponding to a vehicle speed of the motorcycle 1 as shown in Fig. 10. Thus, it is possible to effectively prevent a rider from feeling the pitching in the entire vehicle speed region.

Especially in this embodiment, the predetermined hydraulic pressure (P₁) is set larger as the vehicle speed of the motorcycle 1 is lower as shown in Fig. 10. Therefore, the generation of pitching is effectively suppressed in a low speed region where a rider easily feels the pitching.

In this embodiment, when the operation amount of the brake pedal 18 is equal to or higher than the predetermined operation amount, the braking force distribution ratio is set to the first ratio as shown in Fig. 12. Therefore, when the operation amount of the brake pedal 18 is equal to or higher than the predetermined operation amount, a braking force of a magnitude corresponding to the operation amount of the brake pedal 18 is generated also in the second braking force generating mechanism 36.

Here, it is preferable that the first ratio is such a ratio that the rear wheel 17 is locked earlier than the front wheel 15. With this, it is possible to effectively prevent the front wheel 15 from being locked earlier than the rear wheel 17.

In this embodiment, hydraulic pressure supplied to the second braking force generating mechanism 36 is gradually varied until the braking force distribution ratio becomes equal to the first ratio when the operation amount of the brake pedal 18 exceeds the predetermined operation amount. Therefore, it is possible to prevent a braking force generated in the second braking force generating mechanism 36 from abruptly varying. Therefore, this effectively enables the reduction of a sense of incongruity given to a rider.

To make the front wheel 15 and the rear wheel 17 less prone to be locked, it is preferable that the association mechanism 22 is controlled such that a braking force distribution ratio on the ideal braking force distribution curve C₁ is obtained. In this case, however, the **RR** braking force is reduced from an earlier stage. Thus, there is a tendency to reduce a braking force obtained in the entire braking system.

In this embodiment, on the contrary, the association mechanism 22 is controlled such that the braking force distribution ratio becomes equal to the relatively large first ratio up to the point **X** at which a locked state of the rear wheel 17 is detected. Thus, a greater braking force can be obtained.

In this embodiment, the braking force distribution ratio is maintained at the second ratio after the point **X** at which the locked state of the rear wheel 17 is detected. Thus, in a graph shown in Fig. 12, the braking force distribution ratio is located higher than the ideal braking force distribution curve C₁. That is, in this embodiment, the braking force distribution ratio is such a ratio that the rear wheel 17 is locked always earlier than the front wheel 15. Thus, it is possible to effectively prevent the front wheel 15 from being locked earlier than the rear wheel 17.

The ideal braking force distribution curve is varied depending upon a carrying weight. More specifically, the ideal braking force distribution curve is set such that as the carrying weight of the motorcycle 1 is greater, the ratio of **RR** braking force to the **FR** braking force becomes greater. The ideal braking force distribution curve C₁ shown in Fig. 13 is a curve when the carrying weight is relatively small, and the ideal braking force distribution curve C₂ is a curve when the carrying weight is relatively heavy.

Thus, when the association mechanism 22 is controlled such that a braking force distribution ratio on the predetermined ideal braking force distribution curve C₁ is always obtained, if the carrying weight is heavy, there is an adverse possibility that the braking force distribution ratio is located lower than the ideal braking force distribution curve C₂ in the graph shown in Fig. 13. In this case, the front wheel 15 is locked earlier than the rear wheel 17.

In this embodiment, on the contrary, a timing to switch the braking force distribution ratio is determined depending whether or not the rear wheel 17 is in the locked state. For example, when a carrying weight is small, the braking force distribution ratio is switched at the point **X** where **RR** braking force is relatively small. When the carrying weight is heavy on the other hand, the braking force distribution ratio is switched at the point **Y** where **RR** braking force is relatively large. Therefore, in this embodiment, the braking force distribution ratio is such a ratio that the rear wheel 17 is locked earlier than the front wheel 15 irrespective of the carrying weight. As a result, it is possible to effectively prevent the front wheel 15 from being locked earlier than the rear wheel 17.

In this embodiment, the braking force distribution ratio is set to the second ratio when the operation amount of the brake pedal 18 is equal to or higher than the first operation amount after the locked state of the rear wheel 17 is detected during operation of the brake pedal 18. When the operation amount of the brake pedal 18 is smaller than the first operation amount, on the other hand, the braking force distribution ratio is set to the first ratio. More specifically, when hydraulic pressure detected by the second hydraulic pressure sensor 43 is equal to or higher than the predetermined hydraulic pressure (P₂), the braking force distribution ratio is set to the second ratio. When hydraulic pressure detected by the second hydraulic pressure sensor 43 is smaller than the predetermined hydraulic pressure (P₂), the braking force distribution ratio is set to the first ratio.

Therefore, when the rear wheel 17 is temporarily brought into a locked state due to a road surface state although the operation amount of the brake pedal 18 is small, the braking force distribution ratio is maintained at the large first ratio. Thus, a greater braking force can be generated.

In this embodiment, the braking force distribution ratio is maintained at the first ratio when the operation amount of the brake pedal 18 is smaller than the predetermined second operation amount until the locked state of the rear wheel 17 is detected after the operation of the brake pedal 18 is started. When the operation amount of the brake pedal 18 is equal to or higher than the predetermined second operation amount, on the other hand, the braking force distribution ratio is set to the relatively small second ratio. More specifically, when hydraulic pressure detected by the second hydraulic pressure sensor 43 is smaller than the predetermined hydraulic pressure (P₃), the braking force distribution ratio is maintained at the first ratio. On the other hand, if hydraulic pressure detected by the second hydraulic pressure sensor 43 is equal to or higher than the predetermined hydraulic pressure (P₃), the braking force distribution ratio is set to the relatively small second ratio.

Therefore, when the operation amount of the brake pedal 18 is extremely large, the braking force distribution ratio is ser to the relatively small second ratio irrespective whether or not the rear wheel 17 is locked.

## Claims

1. A braking system (30) for a motorcycle having a front wheel (15) and a rear
wheel (17), the braking system (30) including:
a first braking force generating mechanism (35) which is provided to generate a braking force at the rear wheel (17) when hydraulic pressure is supplied;
a first hydraulic pressure supply mechanism (40a) which supplies hydraulic pressure to the first braking force generating mechanism (35);
a first operation member (18) for operating the first hydraulic pressure supply mechanism (40a);
a second braking force generating mechanism (36) which is provided to generate a braking force at the front wheel (15) when hydraulic pressure is supplied;
a second hydraulic pressure supply mechanism (40b) which supplies hydraulic pressure to the second braking force generating mechanism (36);
a second operation member (13) for operating the second hydraulic pressure supply mechanism (40b);
an association mechanism (22) which supplies hydraulic pressure to the second braking force generating mechanism (36) when the first operation member (18) is operated;
a control unit (28) which controls the association mechanism (22); and
an operation amount detection section (43) which detects an operation amount of the first operation member (18),
the braking system (30) being **characterized in that**
the control unit (28) causes the association mechanism (22) not to supply hydraulic pressure to the second braking force generating mechanism (36) when an operation amount of the first operation member (18) is smaller than a predetermined third operation amount (P1), and causes the association mechanism (22) to supply hydraulic pressure to the second braking force generating mechanism (36) when the operation amount of the first operation member (18) is equal to or higher than the predetermined third operation amount (P1), and the control unit (28) controls the association mechanism (22) such that a braking force distribution ratio of a magnitude of a braking force generated for the rear wheel (17) to a magnitude of a braking force generated for the front wheel (15) becomes equal to a first ratio when the operation amount of the first operation member (18) is equal to or higher than the predetermined third operation amount (P1),
as long as an operation amount of the first operation member (18) is smaller than a predetermined first operation amount (P2) when a locked state of the rear wheel (17) is determined, or
as long as an operation amount of the first operation member (18) is smaller
than a predetermined second operation amount (P3) higher than the predetermined first operation amount (P2) when a locked state of the rear wheel (17) is not determined, and
controls the association mechanism (22) such that the braking force distribution ratio becomes equal to a second ratio which is smaller than the first ratio after the operation amount of the first operation member (18) is equal to or higher than the predetermined first operation amount (P2)when the locked state of the rear wheel (17) is determined or the
predetermined second operation amount (P3) when the locked state of the
rear wheel (17) is not determined.

2. A braking system for a motorcycle according to claim 1, **characterized by** a vehicle speed detection section which detects a vehicle speed of the motorcycle, wherein the control unit (28) includes:
a storing section (28b) which stores an operation amount map that defines a relation between a vehicle speed of the motorcycle and the predetermined third operation amount (P1); and
a calculating section (28a) which calculates the predetermined third operation amount (P1) based on the operation amount map and the vehicle speed of the motorcycle to drive the association mechanism (22) based on the calculated predetermined third operation amount (P1).

3. A braking system for a motorcycle according to claim 2, **characterized in that** the vehicle speed detection section includes:
a front wheel rotation speed sensor (27a) which detects a rotation speed of the front wheel (15); and
a rear wheel rotation speed sensor (27b) which detects a rotation speed of the rear wheel (17).

4. A braking system for a motorcycle according to claim 2 or 3, **characterized in that** in the operation amount map, the lower the vehicle speed is, the greater the predetermined third operation amount (P1) becomes.

5. A braking system for a motorcycle according to any one of claims 1 to 4, **characterized in that** the control unit (28) controls the association mechanism (22) such that when the operation amount of the first operation member (18) exceeds the predetermined third operation amount (P1), hydraulic pressure supplied to the second braking force generating mechanism (36) has a magnitude corresponding to the operation amount of the first operation member (18).

6. A braking system for a motorcycle according to claim 5, **characterized in that** the control unit (28) controls the association mechanism (22) such that when the operation amount of the first operation member (18) exceeds the predetermined third operation amount (P1), hydraulic pressure supplied to the second braking force generating mechanism (36) is gradually varied until hydraulic pressure has a magnitude corresponding to the operation amount of the first operation member (18).

7. A braking system for a motorcycle according to any one of claims 1 to 6, **characterized by** a first brake fluid passage (42) which connects the first hydraulic pressure supply mechanism (40a) and the first braking force generating mechanism (35) with each other, wherein the association mechanism (22) includes:
an association mechanism brake fluid passage (51) which connects the first brake fluid passage (42) and the second braking force generating mechanism (36) with each other; and
an association mechanism on-off valve (52) which is disposed in the association mechanism brake fluid passage (51) to open and close the association mechanism brake fluid passage (51), and
the control unit (28) controls hydraulic pressure supplied to the second braking force generating mechanism (36) by adjusting an opening of the association mechanism on-off valve (52).

8. A braking system for a motorcycle according to claim 7, **characterized by** a hydraulic pressure detection section (43) which detects hydraulic pressure in the first brake fluid passage (42), wherein
the operation amount detection section includes the hydraulic pressure detection section (43), and
the hydraulic pressure detected by the hydraulic pressure detection section (43) is detected as the operation amount of the first operation member (18).

## Patentansprüche

1. Bremssystem (30) für ein Motorrad mit einem Vorderrad (15) und einem Hinterrad (17), wobei das Bremssystem (30) enthält:
eine erste Bremskraft- Erzeugungsvorrichtung (35), die vorgesehen ist, eine Bremskraft an dem Hinterrad (17) zu erzeugen, wenn ein Hydraulikdruck zugeführt wird;
eine erste Hydraulikdruck- Zuführungsvorrichtung (40a), die einen Hydraulikdruck zu der ersten Bremskraft- Erzeugungsvorrichtung (35) zuführt;
ein erstes Betätigungsteil (18) zum Betätigen der ersten Hydraulikdruck- Zuführungsvorrichtung (40a);
eine zweite Bremskraft- Erzeugungsvorrichtung (36), die vorgesehen ist eine Bremskraft an dem Vorderrad (15) zu erzeugen, wenn ein Hydraulikdruck zugeführt wird;
eine zweite Hydraulikdruck- Zuführungsvorrichtung (40b), die Hydraulikdruck zu der zweiten Bremskraft- Erzeugungsvorrichtung (36) zugeführt wird;
ein zweites Betätigungsteil (13) zum Betätigen der zweiten Hydraulikdruck- Zuführungsvorrichtung (40b);
eine Verbundvorrichtung (22), die Hydraulikdruck zu der zweiten Bremskraft- Erzeugungsvorrichtung (36) zuführt, wenn das erste Betätigungsteil (18) betätigt wird;
eine Steuerungseinheit (28), die die Verbundvorrichtung (22) steuert; und einen Betätigungsgröße- Erfassungsabschnitt (43), der eine Betätigungsgröße des ersten Betätigungsteils (18) erfasst,
wobei das Bremssystem (30) **dadurch gekennzeichnet ist, dass** die Steuerungseinheit (28) die Verbundvorrichtung (22) veranlasst, keinen Hydraulikdruck zu der zweiten Bremskraft- Erzeugungsvorrichtung (36) zuzuführen,
wenn eine Betätigungsgröße des ersten Betätigungsteils (18) kleiner als eine vorbestimmte dritte Betätigungsgröße (P1) ist, und die Verbundvorrichtung (22) veranlasst, Hydraulikdruck zu der zweiten Bremskraft- Erzeugungsvorrichtung (36) zuzuführen, wenn die Betätigungsgröße des ersten Betätigungsteils (18) gleich zu
oder höher als die vorbestimmte dritte Betätigungsgröße (P1) ist, und die Steuerungseinheit (28) die Verbundvorrichtung (22) derart steuert, dass ein Bremskraft-Verteilungsverhältnis einer Größe einer Bremskraft, erzeugt für das Hinterrad (17) zu der Größe einer Bremskraft, erzeugt für das Vorderrad (15) gleich zu einem ersten Verhältnis wird, wenn die Betätigungsgröße des ersten Betätigungsteils (18) gleich zu oder höher als die vorbestimmte dritte Betätigungsgröße (P1) ist, solange eine Betätigungsgröße des ersten Betätigungsteils (18) kleiner als eine vorbestimmte erste Betätigungsgröße (P2) ist, wenn ein blockierter Zustand des Hinterrades (17) festgestellt ist, oder
solange eine Betätigungsgröße des ersten Betätigungsteils (18) kleiner als eine vorbestimmte zweite Betätigungsgröße (P3) höher als die vorbestimmte erste Betätigungsgröße (P2), ist, wenn ein blockierter Zustand des Hinterrades (17) nicht festgestellt ist, und
die Verbundvorrichtung (22) derart steuert, dass das Bremskraft- Verteilungsverhältnis gleich zu einem zweiten Verhältnis wird, das kleiner als das erste Verhältnis ist, nachdem die Betätigungsgröße des ersten Betätigungsteils (18) gleich zu oder höher als die der vorbestimmten ersten Betätigungsgröße (P2) ist, wenn der blockierte Zustand des Hinterrades (17) festgestellt wird oder die vorbestimmte zweite Betätigungsgröße (P3), wenn der blockierte Zustand des Hinterrades (17) nicht festgestellt wird.

2. Bremssystem für ein Motorrad nach Anspruch 1, **gekennzeichnet durch** einen Fahrzeuggeschwindigkeit- Erfassungsabschnitt, der eine Fahrzeuggeschwindigkeit des Motorrades erfasst, wobei die Steuerungseinheit (28) enthält:
einen Speicherabschnitt (28b), der eine Betätigungsgrößen- Plan speichert, der eine Beziehung zwischen einer Fahrzeuggeschwindigkeit des Motorrades und die vorbestimmte dritte Betätigungsgröße (P1) bestimmt; und
einen Berechnungsabschnitt (28a), der die vorbestimmte dritte Betätigungsgröße (P1) auf der Grundlage des Betätigungsgrößen- Plans und der Fahrzeuggeschwindigkeit des Motorrades berechnet, um die Verbundvorrichtung (22) auf der Grundlage der berechneten, vorbestimmten dritten Betätigungsgröße (P1) anzutreiben.

3. Bremssystem für eine Motorrad nach Anspruch 2, **dadurch gekennzeichnet, dass** der Fahrzeuggeschwindigkeits- Erfassungsabschnitt enthält:
einen Vorderrad- Drehzahlsensor (27a), der eine Drehzahl des Vorderrades (15) erfasst, und
einen Hinterrad- Drehzahlsensor (27b), der eine Drehzahl des Hinterrades (17) erfasst.

4. Bremssystem für ein Motorrad nach Anspruch 2 oder 3, **dadurch gekennzeichnet, dass** in dem Betätigungsgrößen- Plan je niedriger die Fahrzeuggeschwindigkeit ist, desto größer die vorbestimmte dritte Betätigungsgröße (P1) wird.

5. Bremssystem für ein Motorrad nach einem der Ansprüche 1 bis 4, **dadurch gekennzeichnet, dass** die Steuerungseinheit (28) die Verbundvorrichtung (22) derart steuert, dass, wenn die Betätigungsgröße des ersten Betätigungsteils (18) die vorbestimmte dritte Betätigungsgröße (P1) übersteigt, Hydraulikdruck, zugeführt zu der zweiten Bremskraft- Erzeugungsvorrichtung (36) eine Größe hat, die der Betätigungsgröße des ersten Betätigungsteils (18) entspricht.

6. Bremssystem für ein Motorrad nach Anspruch 5, **dadurch gekennzeichnet, dass** die Steuerungseinheit (28) die Verbundvorrichtung (22) derart steuert, dass wenn die Betätigungsgröße des ersten Betätigungsteils (18) die vorbestimmte dritte Betätigungsgröße (P1) übersteigt, Hydraulikdruck, zugeführt zu der zweiten Bremskraft- Erzeugungsvorrichtung (36), allmählich variiert wird, bis ein Hydraulikdruck eine Größe hat, die der vorbestimmte Betätigungsgröße des ersten Betätigungsteils (18) entspricht.

7. Bremssystem für ein Motorrad nach einem der Ansprüche 1 bis 6, **gekennzeichnet durch** einen ersten Bremsfluidkanal (42), der die erste Hydraulikdruck- Zuführungsvorrichtung (40a) und die erste Bremskraft- Erzeugungsvorrichtung (35) miteinander verbindet, wobei die Verbundvorrichtung (22) enthält:
einen Verbundvorrichtung- Bremsfluidkanal (51), der den ersten Bremsfluidkanal (42) und die zweite Bremskraft- Erzeugungsvorrichtung (36) miteinander verbindet; und
ein Verbundvorrichtungs- Ein- Aus- Ventil (52), das in dem Verbundvorrichtung-Bremsfluidkanal (51) angeordnet ist, um den Verbundvorrichtung- Bremsfluidkanal (51) zu öffnen oder zu schließen, und
wobei die Steuerungseinheit (28) den Hydraulikdruck, zugeführt zu der zweiten Bremskraft- Erzeugungsvorrichtung (36), **durch** Einstellen einer Öffnung des Verbundvorrichtungs- Ein- Aus- Ventils (52) steuert.

8. Bremssystem für ein Motorrad nach Anspruch 1, **gekennzeichnet durch** einen Hydraulikdruck- Erfassungsabschnitt (43), der den Hydraulikdruck in dem ersten Bremsfluidkanal (42) erfasst, wobei
der Betätigungsgröße- Erfassungsabschnitt den Hydraulikdruck- Erfassungsabschnitt (43) enthält, und
der Hydraulikdruck, erfasst **durch** den Hydraulikdruck- Erfassungsabschnitt (43) als die Betätigungsgröße des ersten Betätigungsteils (18) erfasst wird.

## Revendications

1. Système de freinage (30) pour motocyclette ayant une roue avant (15) et une roue arrière (17), le système de freinage (30) comprenant :
- un premier mécanisme générateur de force de freinage (35) qui est prévu pour générer une force de freinage à la roue arrière (17) lorsqu'une pression hydraulique est délivrée ;
- un premier mécanisme d'alimentation en pression hydraulique (40a) qui délivre une pression hydraulique au premier mécanisme générateur de force de freinage (35);
- un premier élément d'opération (18) pour faire fonctionner le premier mécanisme d'alimentation en pression hydraulique (40a) ;
- un second mécanisme générateur de force de freinage (36) qui est prévu pour générer une force de freinage à la roue avant (15) lorsqu'une pression hydraulique est délivrée ;
- un second mécanisme d'alimentation en pression hydraulique (40b) qui délivre une pression hydraulique au second mécanisme générateur de force de freinage (36) ;
- un second élément d'opération (13) pour faire fonctionner le second mécanisme d'alimentation en pression hydraulique (40b) ;
- un mécanisme d'association (22) qui délivre une pression hydraulique au second mécanisme générateur de force de freinage (36) lorsque le premier élément d'opération (18) est actionné ;
- une unité de commande (28) qui commande le mécanisme d'association (22) ; et
- une section de détection de degré d'actionnement (43) qui détecte un degré d'actionnement du premier élément d'opération (18),
- le système de freinage (30) étant **caractérisé en ce que** :
- l'unité de commande (28) fait en sorte que le mécanisme d'association (22) ne délivre pas de pression hydraulique au second mécanisme générateur de force de freinage (36) lorsque le degré d'actionnement du premier élément d'opération (18) est inférieur à un troisième degré d'actionnement prédéterminé (P1) et fait en sorte que le mécanisme d'association (22) délivre une pression hydraulique au second mécanisme générateur de force de freinage (36) lorsque le degré d'actionnement du premier élément d'opération (18) est supérieur ou égal au troisième degré d'actionnement prédéterminé (P1) et l'unité de commande (28) commande le mécanisme d'association (22) de sorte qu'un rapport de distribution de force de freinage du module d'une force de freinage générée pour la roue arrière (17) sur le module d'une force de freinage générée pour la roue avant (15) devienne égal à un premier rapport lorsque le degré d'actionnement du premier élément d'opération (18) est supérieur ou égal au troisième degré d'actionnement prédéterminé (P1),
- tant que le degré d'actionnement du premier élément d'opération (18) est inférieur à un premier degré d'actionnement prédéterminé (P2) lorsqu'un état de blocage de la roue arrière (17) est déterminé ou
- tant que le degré d'actionnement du premier élément d'opération (18) est inférieur à un deuxième degré d'actionnement prédéterminé (P3) supérieur au premier degré d'actionnement prédéterminé (P2) lorsqu'un état de blocage de la roue arrière (17) n'est pas déterminé et
- commande le mécanisme d'association (22) de sorte que le rapport de distribution de force de freinage devienne égal à un second rapport qui est inférieur au premier rapport après que le degré d'actionnement du premier élément d'opération (18) soit supérieur ou égal au premier degré d'actionnement prédéterminé (P2) lorsque l'état de blocage de la roue arrière (17) est déterminé ou au deuxième degré d'actionnement prédéterminé (P3) lorsque l'état de blocage de la roue arrière (17) n'est pas déterminé.

2. Système de freinage pour motocyclette selon la revendication 1, **caractérisé par** une section de détection de vitesse de véhicule qui détecte une vitesse de véhicule de la motocyclette, dans lequel l'unité de commande (28) comprend :
- une section de stockage (28b) qui stocke une table de degré d'actionnement qui définit une relation entre une vitesse de véhicule de la motocyclette et le troisième degré d'actionnement prédéterminé (P1) ; et
- une section de calcul (28a) qui calcule le troisième degré d'actionnement prédéterminé (P1) en fonction de la table de degré d'actionnement et de la vitesse de véhicule de la motocyclette pour commander le mécanisme d'association (22) en fonction du troisième degré d'actionnement prédéterminé (P1) calculé.

3. Système de freinage pour motocyclette selon la revendication 2, **caractérisé en ce que** la section de détection de vitesse de véhicule comprend :
- un capteur de vitesse de rotation de roue avant (27a) qui détecte une vitesse de rotation de la roue avant (15) ; et
- un capteur de vitesse de rotation de roue arrière (27b) qui détecte une vitesse de rotation de la roue arrière (17).

4. Système de freinage pour motocyclette selon les revendications 2 ou 3, **caractérisé en ce que**, dans la table de degré d'actionnement, plus basse est la vitesse de véhicule, plus grand devient le troisième degré d'actionnement prédéterminé (P1).

5. Système de freinage pour motocyclette selon l'une quelconque des revendications 1 à 4, **caractérisé en ce que** l'unité de commande (28) commande le mécanisme d'association (22) de sorte que, lorsque le degré d'actionnement du premier élément d'opération (18) dépasse le troisième degré d'actionnement prédéterminé (P1), la pression hydraulique délivrée au second mécanisme générateur de force de freinage (36) a une grandeur correspondant au degré d'actionnement du premier élément d'opération (18).

6. Système de freinage pour motocyclette selon la revendication 5, **caractérisé en ce que** l'unité de commande (28) commande le mécanisme d'association (22) de sorte que, lorsque le degré d'actionnement du premier élément d'opération (18) dépasse le troisième degré d'actionnement prédéterminé (P1), la pression hydraulique délivrée au second mécanisme générateur de force de freinage (36) est faite varier graduellement jusqu'à ce que la pression hydraulique ait une grandeur correspondant au degré d'actionnement du premier élément d'opération (18).

7. Système de freinage pour motocyclette selon l'une quelconque des revendications 1 à 6, **caractérisé par** un premier passage de fluide de frein (42) qui relie le premier mécanisme d'alimentation en pression hydraulique (40a) et le premier mécanisme générateur de force de freinage (35) l'un à l'autre, dans lequel le mécanisme d'association (22) comprend :
- un passage de fluide de frein de mécanisme d'association (51) qui relie le premier passage de fluide de frein (42) et le second mécanisme générateur de force de freinage (36) l'un à l'autre ; et
- une valve marche-arrêt de mécanisme d'association (52) qui est disposée dans le passage de fluide de frein de mécanisme d'association (51) pour ouvrir et fermer le passage de fluide de frein de mécanisme d'association (51), et
- l'unité de commande (28) commande la pression hydraulique délivrée au second mécanisme générateur de force de freinage (36) en ajustant une ouverture de la valve marche-arrêt de mécanisme d'association (52).

8. Système de freinage pour motocyclette selon la revendication 7, **caractérisé par** une section de détection de pression hydraulique (43) qui détecte une pression hydraulique dans le premier passage de fluide de frein (42), dans lequel :
- la section de détection de degré d'actionnement comprend la section de détection de pression hydraulique (43), et
- la pression hydraulique détectée par la section de détection de pression hydraulique (43) est détectée en tant que degré d'actionnement du premier élément d'opération (18).
